(19) **Europäisches Patentamt European Patent Office Office européen des brevets**

(11) **EP 4 484 202 B1**

(12) **EUROPEAN PATENT SPECIFICATION**

(45) Date of publication and mention
of the grant of the patent:
**13.08.2025 Bulletin 2025/33**

(21) Application number: **22713696.7**

(22) Date of filing: **21.02.2022**

(51) International Patent Classification (IPC):
**B60L 1/00** *(2006.01)*     **B60L 1/02** *(2006.01)*
**B60L 1/14** *(2006.01)*     **H02M 1/00** *(2006.01)*
**H02M 7/5387** *(2007.01)*

(52) Cooperative Patent Classification (CPC):
**B60L 1/003; B60L 1/02; B60L 1/14; H02M 1/008;
H02M 7/53871;** B60L 2200/26

(86) International application number:
**PCT/ES2022/070087**

(87) International publication number:
**WO 2023/156687 (24.08.2023 Gazette 2023/34)**

(54) **POWER SYSTEM FOR AN ELECTRIC TRAIN AND ASSOCIATED CONTROL METHOD**

ANTRIEBSSYSTEM FÜR EINEN ELEKTRISCHEN ZUG UND ZUGEHÖRIGES
STEUERUNGSVERFAHREN

SYSTÈME D'ALIMENTATION POUR UN TRAIN ÉLECTRIQUE ET PROCÉDÉ DE COMMANDE
ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.01.2025 Bulletin 2025/01**

(73) Proprietor: **Ingeteam Power Technology, S.A.
48170 Zamudio (Bizkaia) (ES)**

(72) Inventors:
• **FIGUERES AMORÓS, Emilio
  46022 VALENCIA (ES)**
• **GARCERA SANFELIU, Gabriel
  46022 VALENCIA (ES)**
• **ORTEGA RODRIGUEZ, David
  48170 ZAMUDIO (ES)**
• **LARRAZABAL BENGOECHEA, Igor
  48170 ZAMUDIO (ES)**

(74) Representative: **Galbaian S.Coop.
  Garaia Parke Teknologikoa
  Goiru kalea 1
  20500 Arrasate-Mondragón (ES)**

(56) References cited:
**JP-A- 2012 165 509     US-B2- 10 000 122
US-B2- 11 173 803**

## Description

### TECHNICAL FIELD

The present invention relates to power systems for electric trains and to associated control methods.

### PRIOR ART

Electric trains are operated by at least one three-phase electric motor. Trains of this type therefore have a power system to provide the necessary electric power to the motor. The train is configured for being coupled to an overhead line which acts as a power source to power the motor, with the power system thus being associated both with said overhead line and with said motor. In cases where a train is adapted to work with an AC overhead line, the train comprises a traction transformer which can be connected to the overhead line to convert the electric power of the overhead line to the levels required by the train. The traction transformer may be part of the power system or external to said power system, with said power system being connected to the traction transformer in the latter case. However, in cases where a train is adapted to work only with a DC overhead line, said train does not comprise a traction transformer but rather an inductance. Additionally, for multi-voltage trains, a transformer may operate as an inductance, configuring the transformer in a particular way to that end.

The power system comprises a main DC bus connected to the traction transformer and a traction power converter connected to the main DC bus.

In some trains, the traction power converter is connected directly to the main DC bus, said traction power converter being configured for converting the DC power of said main DC bus to three-phase AC power for the traction motor.

The power system furthermore has a control unit for controlling the conversion to be performed by the traction power converter, and thereby being able to provide the power required by the motor at all times. This control unit can be a specific control unit for controlling the traction power converter or can be integrated in another control unit in charge of performing more functions.

An electric train also comprises what is known as auxiliary loads, which can be of different types. Some of these auxiliary loads, such as cooling fans (motors, for example), may require variable voltage and frequency. However, another type of loads such as lighting and temperature control of the train are, for example, electrically powered by a 400 V three-phase voltage, and unlike what occurs in a motor, the voltage and frequency required for said auxiliary loads are relatively constant.

Generally, the power system comprises an auxiliary power converter to adapt the DC voltage of an auxiliary DC bus to the AC voltage required for the auxiliary loads which require relatively constant voltage and frequency. The auxiliary DC bus can be the main DC bus if the train comprises an additional transformer, as described above, or otherwise the power system may comprise an additional power converter connected between said auxiliary DC bus and the main DC bus.

EP2695763A2 discloses a power system with an additional power converter connected between the auxiliary DC bus and the main DC bus, wherein said additional power converter furthermore acts like a step-down chopper. In that sense, said invention provides a three-phase auxiliary output, isolated from motor requirements, through which auxiliary loads are powered.

US11173803B2 discloses a vehicle system including a converter, outlets, and a switching arrangement electrically between the outlets and the converter. A controller is programmed to, responsive to a first request, operate the switching arrangement to electrically connect a line and a neutral to a first outlet and operate the converter to output single-phase power to the first outlet. Responsive to a second request, the controller is configured to operate the switching arrangement to electrically connect a plurality of lines and not the neutral to a second outlet, and operate the converter to output three-phase power to the second outlet.

US10000122B2 discloses a converter for powering a single-phase load connected to a single-phase energy supply network, one of the two conductors of said single-phase energy supply network being connected to the ground potential and the other conductor being connected to a phase of a three-phase energy supply network.

### DISCLOSURE OF THE INVENTION

The object of the invention is to provide a power system for an electric train and an associated control method, as defined in the claims.

A first aspect of the invention relates to the power system. The electric train comprises auxiliary loads which work at substantially constant voltage and frequency, and the power system comprises at least one three-phase auxiliary output configured for being coupled to said auxiliary loads, a DC bus, and a three-phase auxiliary power converter which is connected between the DC bus and the three-phase auxiliary output and configured for adapting the power of the DC bus to power said auxiliary loads.

The power system further comprises an additional single-phase power converter attached to the DC bus and a single-phase output with a first power line and a second power line. The first power line is connected to the phase of the additional power converter and the second power line is connected to one of the phases of the auxiliary power converter.

The single-phase output comprises a voltage between the first power line and the second power line equal to the difference between the voltage of the phase of the additional power converter and the voltage of the phase of the auxiliary power converter which is connected to the second power line of the single-phase output.

Therefore, from the same DC bus which powers the auxiliary power converter, and utilizing the auxiliary power converter itself, an additional controllable single-phase output in the train can be obtained for additional loads which also work at substantially constant voltage and frequency such as, for example, a battery charger. Said output can therefore offer an AC voltage or a DC voltage if so required (since it is controlled), and of the desired value, where said value may even be up to twice the line-to-neutral voltage of the three-phase auxiliary output. Although the single-phase output is connected to one of the phases of the auxiliary power converter, being connected to another phase the voltage of which is controllable (the phase of the additional power converter) gives the power system a sufficient degree of freedom to provide the required voltage for said single-phase output. Furthermore, this degree of freedom is obtained in a compact manner as a result of reusing one of the phases of the auxiliary power converter, which allows dispensing with another additional phase, and therefore additional hardware, which could further increase the cost of the system.

The power system comprises a control unit configured for controlling the voltage in the phase of the auxiliary power converter connected to the second power line of the single-phase output based on the needs required for the auxiliary loads powered by the three-phase auxiliary output.

The control unit is also configured for controlling the voltage in the phase of the additional power converter based on the voltage in said phase of the auxiliary power converter and on a required voltage for said single-phase output. The additional power converter is in turn configured for adapting the DC voltage of the DC bus to the power required for the single-phase output.

The control unit is further configured for calculating the necessary voltage in the phase of the additional power converter that is equal to the difference between the voltage in said phase of the auxiliary power converter and the required voltage for said single-phase output, and for controlling the voltage in the phase of the additional power converter based on said calculated necessary voltage.

A second aspect of the invention relates to a control method for a power system of an electric train comprising auxiliary loads which work at constant voltage and frequency, such as the power system of the first aspect of the invention.

In the control method, the voltage of a DC bus of the power system is adapted to power the auxiliary loads of the corresponding electric train by means of an auxiliary power converter, and said adapted voltage is supplied through a three-phase auxiliary output of the power system.

The power system further comprises an additional single-phase power converter attached to the DC bus and a single-phase output with a first power line and a second power line. The first power line of the single-phase output is connected to the phase of the additional power converter, and the second power line of said single-phase output is connected to one of the phases of the auxiliary power converter.

To obtain the voltage between the first power line and the second power line to be supplied to the single-phase output, adaptation of the voltage of the DC bus is performed in the control method by controlling the difference between the voltage in one of the phases of the auxiliary power converter and the voltage of the phase of the additional power converter, with the result of said difference being supplied to the single-phase output.

The voltage of the phase of the auxiliary power converter considered for powering the auxiliary loads is controlled based on the requirements for powering the auxiliary loads, the voltage of the phase of the additional power converter being controlled based on the voltage in said phase of the auxiliary power converter and on a required voltage between the first power line and the second power line at the single-phase output.

The advantages described for the power system are also obtained with the proposed control method.

These and other advantages and features of the invention will become apparent in view of the figures and detailed description of the invention.

DESCRIPTION OF THE DRAWINGS

Figure 1 schematically shows an embodiment of the power system according to the invention.

Figure 2 shows in detail the power system of Figure 1.

Figure 3a vectorially represents a single-phase output of the power system of Figure 1.

Figure 3b vectorially represents the maximum value of the single-phase output of the power system of Figure 1.

Figure 4 schematically shows a power converter with four branches of the state of the art.

DETAILED DISCLOSURE OF THE INVENTION

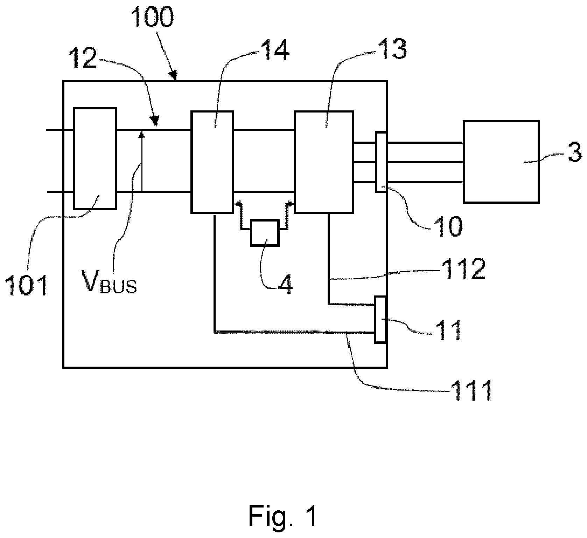

A first aspect of the invention relates to a power system 100 for an electric train (not depicted in the figures) as depicted by way of example in Figure 1. The electric train comprises auxiliary loads 3 which work at substantially constant voltage and frequency including, among others, outlets, temperature control, and lighting of the train, for example.

The power system 100 comprises a three-phase auxiliary output 10 configured for being coupled to the auxiliary loads 3 of the electric train and thereby being able to power said auxiliary loads 3, a DC bus 12, and a three-phase auxiliary power converter 13 which is connected between the DC bus 12 and the three-phase auxiliary output 10 and configured for adapting the power of the DC bus 12 to the AC power required by the auxiliary loads 3.

The power system 100 comprises a control unit 4 configured for controlling said auxiliary power converter based on the requirements of the three-phase auxiliary output 10. The control unit 4 can be a control unit specific for performing this function, or it can be a control unit in charge of performing other functions in addition to this function. A control unit can be a microprocessor, a microcontroller, a DSP, an FPGA, or any electronic device with computing capacity.

An electric train is adapted to be connected to an overhead line, not depicted in the figures, to obtain the electric power it requires, and if it is adapted to be coupled to an AC overhead line, the train comprises a traction transformer, not depicted in the figures, to transform the voltage of the AC overhead line, a converter (not depicted in the figures) connected to the traction transformer and configured for establishing the DC voltage required in a (high-voltage) DC traction bus, and a DC converter 101 connected to said DC traction bus to adapt said voltage to a main DC bus of the power system 100. Said DC converter 101 is preferably a step-down chopper and can furthermore be bidirectional, such that the power system 100 would also be useful for energy systems in that case. The DC converter 101, as well as the converter connected to the traction transformer, can be part of the power system 100.

The electric train further comprises at least one three-phase traction motor, not depicted in the figures, which is in charge of providing the force required by the train to travel, and the power system 100 comprises a traction power converter (not depicted in the figures) for converting the DC power from the overhead line to the AC power required for the motor. In the event that the train comprises a converter connected to the traction transformer and a DC converter 101 like those described in the preceding paragraph, the traction power converter is connected to the (high-voltage) DC traction bus.

Some trains comprise the traction power converter connected directly to the main DC bus. In these cases, the power system 100 preferably comprises a converter connected to said main current bus to reduce the DC voltage of the DC bus (such as DC converter 101), with an auxiliary DC bus with a reduced voltage being obtained on the other side of the converter. Said converter can preferably be a DC/DC power converter, and it could furthermore be bidirectional. In these cases, the auxiliary power converter 13 is connected to this auxiliary DC bus, said auxiliary DC bus thereby being the DC bus 12 mentioned above. Furthermore, since the motor requirements of the train vary, the main DC bus experiences these effects, and as a result of the converters, these changes do not affect the DC bus 12 and therefore do not affect the auxiliary power converter 13.

Other trains comprise a power system 100 with an additional transformer connected to the main DC bus, such that an additional DC bus is provided on the other side of the transformer. The traction power converter is connected to said additional DC bus, such that the influence of the motor is not reflected in the main DC bus as a result of said additional transformer. In these cases, therefore, the auxiliary power converter 13 is connected to the main DC bus, with said main DC bus thereby being the current bus 12.

The power system 100 further comprises, in any of its embodiments, a single-phase output 11 with a first power line 111 and a second power line 112, and an additional power converter 14 connected to the DC bus 12, said additional power converter 14 preferably being a single-phase power converter.

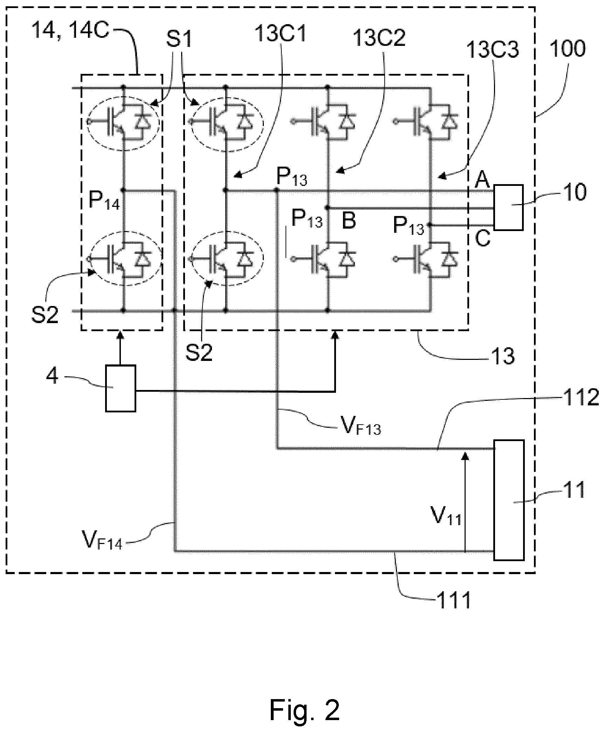

The auxiliary power converter 13 is configured for adapting the DC voltage $V_{BUS}$ of the DC bus 12 to the AC voltage required to power the auxiliary loads 13 connected to the three-phase auxiliary output 10 and comprises three semiconductor branches 13C1, 13C2, and 13C3, one for each phase A, B, and C of the auxiliary power converter 13, as depicted in Figure 2. Each semiconductor branch 13C1, 13C2, and 13C3 preferably comprises two semiconductors S1 and S2 connected in series at an intermediate point $P_{13}$, with each phase A, B, and C being connected to a respective intermediate point $P_{13}$.

The additional power converter 14 is in turn configured for adapting the DC voltage $V_{BUS}$ of the DC bus 12 to the power required for the single-phase output 11, as described in detail below.

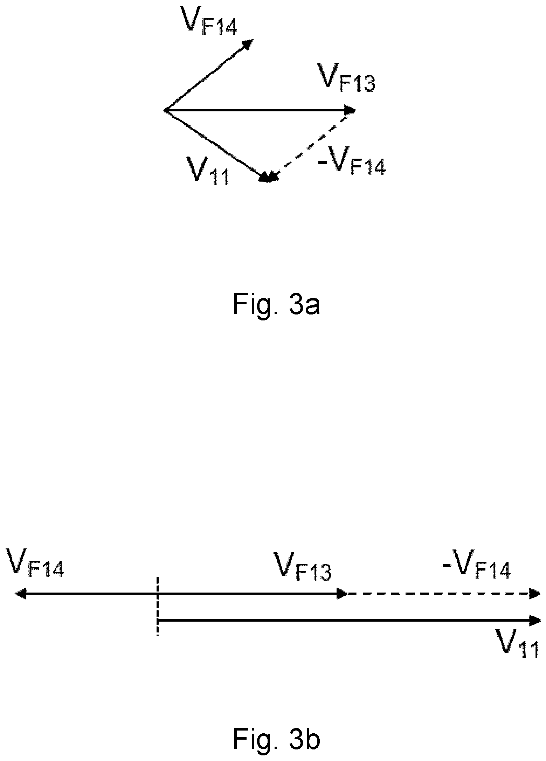

The first power line 111 of the single-phase output 11 is connected to the phase of the additional power converter 14, and the second power line 112 of said single-phase output 11 is connected to one of the three phases A, B, and C of the auxiliary power converter 13 (to phase A in the example of Figure 2). The voltage $V_{11}$ of the single-phase output 11, i.e., the voltage difference between power lines 111 and 112 of the single-phase output 11, is therefore the difference between the voltage $V_{F13}$ of phase A of the auxiliary power converter 13 connected to the second power line 112 of said single-phase output 11 and the voltage $V_{F14}$ of the phase of the additional power converter 14, as reflected in Equation 1 and vectorially depicted in Figure 3a.

$$V_{11} = V_{F13} - V_{F14} \qquad \text{(Equation 1)}$$

Said single-phase output 11 can therefore offer an AC voltage or a DC voltage if so required (since it is controlled), and of the desired value, where said value $V_{11}$ may even be up to twice the line-to-neutral voltage

$V_{F13}$ of the three-phase auxiliary output 10, as vectorially depicted in Figure 3b.

The power system 100 comprises a control unit 4 configured for controlling the voltage $V_{11}$ of the single-phase output 11 based on the difference between the voltage $V_{F14}$ of the phase of the additional power converter 14 and the voltage $V_{F13}$ of the phase A, B, and C of the auxiliary power converter 13 which is connected to the second power line 112 of the single-phase output 11. Said control unit 4 is preferably the same control unit which is also configured for controlling the auxiliary power converter 13, although alternatively, said auxiliary power converter 13 could be controlled by a different second control unit.

Priority is given to the requirements of auxiliary loads 3 connected to the three-phase auxiliary output 10, so control of the voltage $V_{F13}$ of the phase A, B, and C of the auxiliary power converter 13 which is connected to the second power line 112 of the single-phase output 11 is based on the needs required for the three-phase auxiliary output 10 and not based on the requirements for the single-phase output 11. With this premise, the corresponding control unit 4 adapts the voltage $V_{F14}$ in the phase of the additional power converter 14 based on the voltage $V_{F13}$ present in said phase A, B, and C of the auxiliary power converter 13 connected to the second power line 112 of the single-phase output 11, in order to obtain the required voltage $V^{*}_{11}$ for the single-phase output 11.

The additional power converter 14 comprises a semiconductor branch 14C preferably formed by two semiconductors S1 and S2 connected in series in a midpoint $P_{14}$, the phase being connected to said midpoint $P_{14}$. The voltage $V_{F14}$ of the phase of the additional power converter 14 is controlled by controlling the opening and closing of semiconductors S1 and S2 of the semiconductor branch 14C of said additional power converter 14. To obtain the sequence for triggering said semiconductors S1 and S2, a known modulation technique such as PWM, SHE, or any other technique is used.

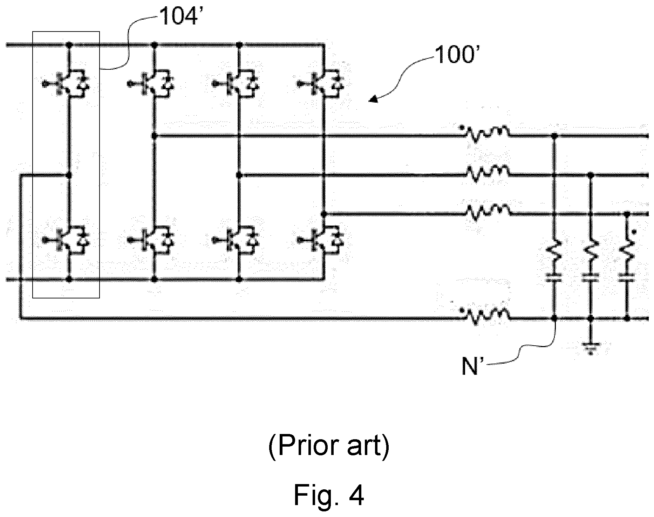

Power converters 100' with four branches are known, but the fourth branch 104' of these power converters 100' is used for controlling zero-sequence currents or harmonics, for example, i.e., for controlling the quality of the signals resulting from the power converter 100', by correcting or eliminating the third zero-sequence harmonic present in third harmonic injection PWM or spatial vector modulations. To that end, the fourth branch 104' is connected to a neutral N' as depicted in Figure 4. However, in the power system 100 of the invention, given that the function provided by the additional power converter 14 is completely different, said additional power converter 14 is physically disconnected from the auxiliary power converter 13. Therefore, even if the auxiliary power converter 13 and the additional power converter 14 are considered as forming an assembly, said assembly cannot be considered a power converter with four branches in use.

The corresponding control unit 4 implements a control block to obtain the voltage $V_{11}$ between the power lines 111 and 112 of the single-phase output 11. Said control block receives as inputs the required voltage $V^{*}_{11}$ between the power lines 111 and 112 of said single-phase output 11 (voltage setpoint) and the voltage $V_{F13}$ of phase A, B, and C of the auxiliary power converter 13 connected to the second power line 112 of said single-phase output 11 (given that the three-phase auxiliary output 10 prevails over the single-phase output 11). As described above, the voltage $V_{11}$ between the power lines 111 and 112 of the single-phase output 11 is the result of the difference between the voltage $V_{F13}$ of said phase A, B, and C of the auxiliary power converter 13 and the voltage $V_{F14}$ of the phase of the additional power converter 14, and a control is performed on said difference in the control block to obtain the desired value.

Therefore, a difference between the voltage $V_{F13}$ of said phase A, B, and C of the auxiliary power converter 13 and the required voltage $V^{*}_{11}$ between the power lines 111 and 112 of the single-phase output 11 is calculated in said control block, the necessary voltage $V^{*}_{F14}$ of the phase of the additional power converter 14 in order to obtain said required voltage $V^{*}_{11}$ between the power lines 111 and 112 of said single-phase output 11 being obtained, as depicted in the following equation.

$$V^{*}_{F14} = V_{F13} - V^{*}_{11} \qquad \text{(Equation 2)}$$

Lastly, the corresponding control unit 4 controls the semiconductor branch 14C of the additional power converter 14, the closing and opening of the semiconductors S1 and S2 of said semiconductor branch 14C, the voltage $V_{F14}$ in the corresponding phase to be equal to said calculated necessary voltage $V^{*}_{F14}$ and to therefore obtain a voltage $V_{11}$ between the power lines 111 and 112 of the single-phase output 11 that is equal to the required voltage $V^{*}_{11}$.

A second aspect of the invention relates to a control method for a power system 100 of an electric train, such as the power system 100 of the first aspect of the invention.

In the control method, by means of a three-phase auxiliary power converter 13, the voltage $V_{BUS}$ of a DC bus 12 of the power system 100 is adapted to power the auxiliary loads 3, and said adapted voltage is supplied through a three-phase auxiliary output 10 of the power system 100.

The power system 100 in which the control method is implemented comprises an additional single-phase power converter 14 attached to the DC bus 12 and a single-phase output 11 with a first power line 111 and a second power line 112, the first power line 111 being connected to the phase of the additional power converter 14 and the second power line 112 being connected to one of the phases A, B, and C of the auxiliary power converter 13.

In order to obtain a required voltage $V^{*}_{11}$ be-

tween the first power line 111 and the second power line 112 of the single-phase output 11, adaptation of the voltage $V_{BUS}$ of the DC bus 12 is performed in the control method by controlling the difference between the voltage $V_{F13}$ in one of the phases A, B, and C of the auxiliary power converter 13 and the voltage $V_{F14}$ of the phase of the additional power converter 14, the resulting difference being supplied to the single-phase output 11.

The voltage $V_{F13}$ of phase A, B, and C of the auxiliary power converter 13 connected to the second power line 112 is controlled based on the requirements for powering the auxiliary loads 3, together with the other two phases A, B, and C of said auxiliary power converter 13, the voltage $V_{F14}$ of the phase of the additional power converter 14 being controlled based on said voltage $V_{F13}$ and on the required voltage $V^*_{11}$ between the first power line 111 and the second power line 112 at the single-phase output 11. This means that control of the three-phase auxiliary output 10 for the auxiliary loads 3 prevails over control of the single-phase output 11, said control of the single-phase output 11 being dependent upon control of the three-phase auxiliary output 10.

In the control method, a necessary voltage $V^*_{F14}$ in the phase of the additional power converter 14 is obtained as a result of the difference between the voltage $V_{F13}$ in said phase A, B, and C of the auxiliary power converter 13 and the required voltage $V^*_{11}$ for said single-phase output 11 (see Equation 2), and the voltage $V_{F14}$ in the phase of the additional power converter 14 is controlled to be equal to said necessary voltage $V^*_{F14}$ obtained, so as to obtain a voltage $V_{11}$ between the first power line 111 and the second power line 112 at the single-phase output 11 that is equal to the required voltage $V^*_{11}$.

The control method can be implemented in a power system 100 such as the first aspect of the invention, therefore comprising a suitable embodiment with respect to the corresponding embodiment and/or configuration of the power system 100. Therefore, all that is described for any embodiment and/or configuration of the power system 100 is also valid for the corresponding embodiment of the method, and similarly, all that is described for any embodiment of the method is also valid for the corresponding embodiment and/or configuration of the power system 100.

**Claims**

1. Power system for an electric train comprising auxiliary loads (3), the power system (100) comprising a three-phase auxiliary output (10) configured for being coupled to the auxiliary loads (3); a DC bus (12); and a three-phase auxiliary power converter (13) which is connected between the DC bus (12) and the three-phase auxiliary output (10) and is configured for adapting a voltage ($V_{BUS}$) of the DC bus (12) to power the auxiliary loads (3), the power system (100) further comprising an additional single-phase power converter (14) attached to the DC bus (12) and a single-phase output (11) with a first power line (111) and a second power line (112), the first power line (111) being connected to the phase of the additional power converter (14) and the second power line (112) being connected to one of the phases (A, B, C) of the auxiliary power converter (13), said single-phase output (11) comprising a voltage ($V_{11}$) between the first power line (111) and the second power line (112) equal to the difference between the voltage ($V_{F14}$) of the phase of the additional power converter (14) and the voltage ($V_{F13}$) of the phase (A, B, C) of the auxiliary power converter (13) which is connected to the second power line (112) of the single-phase output (11), the power system comprising a control unit (4) configured for controlling the voltage ($V_{F13}$) in the phase (A, B, C) of the auxiliary power converter (13) connected to the second power line (112) of the single-phase output (11) based on the needs required for the auxiliary loads (13) powered by the three-phase auxiliary output (10), **characterized in that** the control unit (4) is also configured for controlling the voltage ($V_{F14}$) in the phase of the additional power converter (14) based on the voltage ($V_{F13}$) in said phase (A, B, C) of the auxiliary power converter (13) and on a required voltage ($V^*_{11}$) for said single-phase output (11) for additional loads, the control unit (4) being further configured for controlling both the voltage ($V_{F13}$) in the phase (A, B, C) of the auxiliary power converter (13) connected to the second power line (112) of the single-phase output (11) and also the voltage ($V_{F14}$) of the phase of the additional power converter (14) connected to the first power line (111) of the single-phase output (11), in order to provide the required voltage ($V^*_{11}$) for said single-phase output (11), the additional power converter (14) being in turn configured for adapting the DC voltage ($V_{BUS}$) of the DC bus (12) to the power required for the single-phase output (11), said control unit (4) being further configured for calculating the necessary voltage ($V^*_{F14}$) in the phase of the additional power converter (14) that is equal to the difference between the voltage ($V_{F13}$) in said phase (A, B, C) of the auxiliary power converter (13) and the required voltage ($V^*_{11}$) for said single-phase output (11) and for controlling the voltage ($V_{F14}$) in the phase of the additional power converter (14) based on said calculated necessary voltage ($V^*_{F14}$).

2. Power system according to claim 1, wherein the additional power converter (14) is physically disconnected from the auxiliary power converter (13).

3. Power system according to claim 1 or 2, wherein the auxiliary power converter (13) comprises a semiconductor branch (13C1, 13C2, 13C3) formed by two controllable switches (S1, S2) connected in series at an intermediate point ($P_{13}$), for each of the three phases (A, B, C), and the three semiconductor branches (13C1, 13C2, 13C3) are connected in parallel between a positive terminal of the DC bus (12) and a negative terminal of said DC bus (12), the additional power converter (14) comprising a semiconductor branch (14C) formed by two controllable switches (S1, S2) connected in series at an intermediate point ($P_{14}$), and said intermediate points ($P_{13}$, $P_{14}$) being connected to the corresponding output (10, 11) of the power system (100).

4. Power system according to claim 3, wherein the controllable switches (S1, S2) of the semiconductor branch (13C1) of the auxiliary power converter (13) of the phase (A, B, C) connected to the single-phase output (11) are designed to withstand a higher current and/or voltage than the controllable switches (S1, S2) of the other two semiconductor branches (13C1, 13C2, 13C3) of said power converter (13).

5. Power system according to claim 3 or 4, wherein the controllable switches (S1, S2) of the semiconductor branch (14C) of the additional power converter (14) are designed to withstand a lower current and/or voltage than the controllable switches (S1, S2) of any of the semiconductor branches (13C1, 13C2, 13C3) of the auxiliary power converter (13).

6. Control method for a power system of an electric train comprising auxiliary loads (3), in which by means of a three-phase auxiliary power converter (13) of the power system (100) the voltage ($V_{BUS}$) of a DC bus (12) of said power system (100) is adapted to power the auxiliary loads (3), and said adapted voltage ($V_{BUS}$) is supplied through a three-phase auxiliary output (10) of the power system (100), the control method being adapted to be implemented in a power system (100) further comprising a single-phase output (11) with a first power line (111) and a second power line (112) and an additional single-phase power converter (14) attached to the DC bus (12) and to the first power line (111) of the single-phase output (11), and in which one of the phases (A, B, C) of the auxiliary power converter (13) is connected to the second power line (112) of the single-phase output (11), **characterized in that** in order to obtain a required voltage ($V^*_{11}$) between the first power line (111) and the second power line (112) to be supplied to the single-phase output (11) for additional loads, adaptation of the voltage ($V_{BUS}$) of the DC bus (12) is performed in the control method by controlling the difference between the voltage ($V_{F13}$) of the phase (A, B, C) of the auxiliary power converter (13) connected to the second power line (112) and the voltage ($V_{F14}$) of the phase of the additional power converter (14), the resulting difference at the single-phase output (11) being the voltage ($V_{11}$) which is supplied to the single-phase output (11) of said power system (100), the voltage ($V_{F13}$) of the phase (A, B, C) of the auxiliary power converter (13) considered for powering the auxiliary loads (3) being controlled based on the requirements for powering the auxiliary loads (3), the voltage ($V_{F14}$) of the phase of the additional power converter (14) being controlled based on the voltage ($V_{F13}$) in said phase (A, B, C) of the auxiliary power converter (13) and on a required voltage ($V^*_{11}$) between the first power line (111) and the second power line (112) at the single-phase output (11), such that the voltage ($V_{11}$) of said single-phase output (11) is then obtained by controlling both the voltage ($V_{F13}$) in the phase (A, B, C) of the auxiliary power converter (13) connected to the second power line (112) of the single-phase output (11) and the voltage ($V_{F14}$) of the phase of the additional power converter (14) connected to the first power line (111) of the single-phase output (11).

7. Control method according to claim 6, wherein a necessary voltage ($V^*_{F14}$) in the phase of the additional power converter (14) is obtained as a result of the difference between the voltage ($V_{F13}$) in said phase (A, B, C) of the auxiliary power converter (13) and the required voltage ($V^*_{11}$) for said single-phase output (11), and wherein the voltage ($V_{F14}$) in the phase of the additional power converter (14) is controlled so that it is equal to said necessary voltage ($V^*_{F14}$).

8. Electric train, **characterized in that** it comprises a power system (100) according to any of claims 1 to 5.

9. Electric train according to claim 8, **characterized in that** the control unit (4) is configured for implementing the control method according to claim 6 or 7.

**Patentansprüche**

1. Antriebssystem für einen elektrischen Zug umfassend Nebenverbraucher (3), wobei das Antriebssystem (100) einen dreiphasigen Hilfsausgang (10), welche dazu ausgebildet ist, mit den Nebenverbrauchern (3) gekoppelt zu werden; einen Gleichstrombus (12); und einen dreiphasigen Hilfsstromrichter (13), welcher zwischen dem Gleichstrombus (12) und dem dreiphasigen Hilfsausgang (10) angeschlossen ist und dazu ausgebildet ist, eine Spannung ($V_{BUS}$) des Gleichstrombusses (12) anzupassen, um die Nebenverbraucher (3) zu versorgen, umfasst, wobei das Antriebssystem (100) zusätzlich einen zusätzlichen einphasigen Stromrichter (14), welcher am Gleichstrombus (12) befestigt ist, und einen einphasigen Ausgang (11) mit einer ersten Stromleitung (111) und einer zweiten Stromleitung (112), wobei die erste Stromleitung (111) an der Phase des zusätzlichen Stromrichters (14) angeschlossen ist und wobei die zweite Stromleitung (112) an einer der Phasen (A, B, C) des Hilfsstromrichters (13) angeschlossen ist, wobei der genannte einphasige Ausgang (11) eine Spannung ($V_{11}$) zwischen der ersten Stromleitung (111) und der zweiten Stromleitung (112) umfasst, welche dem Unterschied zwischen der Spannung ($V_{F14}$) der Phase des zusätzlichen Stromrichters (14) und der Spannung ($V_{F13}$) der Phase (A, B, C) des Hilfsstromrichters (13), welche an der zweiten Stromleitung (112) des einphasigen Ausgangs (11) angeschlossen ist, gleich ist, wobei das Antriebssystem eine Steuereinheit (4) umfasst, welche dazu ausgebildet ist, die Spannung ($V_{F13}$) in der Phase (A, B, C) des Hilfsstromrichters (13), welche an der zweiten Stromleitung (112) des einphasigen Ausgangs (11) angeschlossen ist, basierend auf den benötigten Bedürfnissen für die Nebenverbraucher (13) versorgt vom dreiphasigen Hilfsausgang (10) zu steuern, **dadurch gekennzeichnet, dass** die Steuereinheit (4) auch dazu ausgebildet ist, die Spannung ($V_{F14}$) in der Phase des zusätzlichen Stromrichters (14) basierend auf der Spannung ($V_{F13}$) in der genannten Phase (A, B, C) des Hilfsstromrichters (13) und auf einer benötigten Spannung ($V^*_{11}$) für den genannten einphasigen Ausgang (11) für Mehrbelastungen zu steuern, wobei die Steuereinheit (4) zusätzlich dazu ausgebildet ist, sowohl die Spannung ($V_{F13}$) in der Phase (A, B, C) des Hilfsstromrichters (13), welche an der zweiten Stromleitung (112) des einphasigen Ausgangs (11) angeschlossen ist, als auch die Spannung ($V_{F14}$) der Phase des zusätzlichen Stromrichters (14), welche an der ersten Stromleitung (111) für den genannten einphasigen Ausgang (11) angeschlossen ist, zu steuern, um die benötigte Spannung ($V^*_{11}$) für den genannten einphasigen Ausgang (11) bereitzustellen, wobei der zusätzliche Stromrichter (14) wiederum dazu ausgebildet ist, die Gleichspannung ($V_{BUS}$) des Gleichstrombusses (12) an die für den einphasigen Ausgang (11) benötigte Leistung anzupassen, wobei die genannte Steuereinheit (4) zusätzlich dazu ausgebildet ist, die nötige Spannung ($V^*_{F14}$) in der Phase des zusätzlichen Stromrichters (14) zu berechnen, welche dem Unterschied zwischen der Spannung ($V_{F13}$) in der genannten Phase (A, B, C) des Hilfsstromrichters (13) und der benötigten Spannung ($V^*_{11}$) für den genannten einphasigen Ausgang (11) gleich ist, und die Spannung ($V_{F14}$) in der Phase des zusätzlichen Stromrichters (14) basierend auf die genannte berechnete nötige Spannung ($V^*_{F14}$) zu steuern.

2. Antriebssystem nach Anspruch 1, wobei der zusätzliche Stromrichter (14) physikalisch vom Hilfsstromrichter (13) getrennt ist.

3. Antriebssystem nach einem der Ansprüche 1 oder 2, wobei der Hilfsstromrichter (13) einen Halbleiterzweig (13C1, 13C2, 13C3) umfasst, gebildet aus zwei steuerbaren Schaltern (S1, S2), welche an einem Zwischenpunkt ($P_{13}$) in Reihe geschaltet sind, für jede der drei Phasen (A, B, C), und die drei Halbleiterzweige (13C1, 13C2, 13C3) zwischen einem positiven Pol des Gleichstrombusses (12) und einem negativen Pol des genannten Gleichstrombusses (12) parallel geschaltet sind, wobei der zusätzliche Stromrichter (14) einen Halbleiterzweig (14C) umfasst, gebildet aus zwei steuerbaren Schaltern (S1, S2), welche an einem Zwischenpunkt ($P_{14}$) in Reihe geschaltet sind, und wobei die genannten Zwischenpunkte ($P_{13}$, $P_{14}$) am entsprechenden Ausgang (10, 11) des Antriebssystems (100) angeschlossen sind.

4. Antriebssystem nach Anspruch 3, wobei die steuerbaren Schalter (S1, S2) des Halbleiterzweigs (13C1) des Hilfsstromrichters (13) der Phase (A, B, C), welche an einphasigen Ausgang (11) angeschlossen ist, dafür ausgelegt sind, einen höheren Strom und/oder Spannung als die steuerbaren Schalter (S1, S2) der anderen beiden Halbleiterzweige (13C1, 13C2, 13C3) des genannten Stromrichters (13) zu widerstehen.

5. Antriebssystem nach Anspruch 3 oder 4, wobei die steuerbaren Schalter (S1, S2) des Halbleiterzweigs (14C) des zusätzlichen Stromrichters (14) dafür ausgelegt sind, einen niedrigeren Strom und/oder Spannung als die steuerbaren Schalter (S1, S2) jeder der Halbleiterzweige (13C1, 13C2, 13C3) des Hilfsstromrichters (13) zu widerstehen.

6. Steuerungsverfahren für ein Antriebssystem eines elektrischen Zuges umfassend Nebenverbraucher (3), in welchem mittels eines dreiphasigen Hilfsstromrichters (13) des Antriebssystems (100) die Spannung ($V_{BUS}$) eines Gleichstrombusses (12) des genannten Antriebssystems (100) dazu angepasst ist, die Nebenverbraucher (3) zu versorgen, und die genannte angepasste Spannung ($V_{BUS}$) über einen dreiphasigen Hilfsausgang (10) des Antriebssystems (100) zugeführt wird, wobei das Steuerungsverfahren dazu angepasst ist, in einem Antriebssystem (100) implementiert zu werden, welches zusätzlich einen einphasigen Ausgang (11) mit einer ersten Stromleitung (111) und einer zweiten Stromleitung (112) und einen zusätzlichen einphasigen Stromrichter (14), welcher am Gleichstrombus (12) und an der ersten Stromleitung (111) des einphasigen Ausgangs (11) befestigt ist, umfasst, und in welchem eine der Phasen (A, B, C) des Hilfsstromrichters (13) an der zweiten Stromleitung (112) des einphasigen Ausgangs (11) angeschlossen ist, **dadurch gekennzeichnet, dass**, um eine benötigte

Spannung ($V^*_{11}$) zwischen der ersten Stromleitung (111) und der zweiten Stromleitung (112), welche dem einphasigen Ausgang (11) für Mehrbelastungen zuzuführen ist, zu erhalten, eine Anpassung der Spannung ($V_{BUS}$) des Gleichstrombusses (12) im Steuerungsverfahren durchgeführt wird, indem der Unterschied zwischen der Spannung ($V_{F13}$) der Phase (A, B, C) des Hilfsstromrichters (13), welche an der zweiten Stromleitung (112) angeschlossen ist, und der Spannung ($V_{F14}$) der Phase des zusätzlichen Stromrichters (14) gesteuert wird, wobei der sich ergebende Unterschied am einphasigen Ausgang (11) die Spannung ($V_{11}$) ist, welche dem einphasigen Ausgang (11) des genannten Antriebssystems (100) zugeführt wird, wobei die Spannung ($V_{F13}$) der Phase (A, B, C) des Hilfsstromrichters (13), welche zur Versorgung der Nebenverbraucher (3) berücksichtigt wird, basierend auf den Bedürfnissen zur Versorgung der Nebenverbraucher (3) gesteuert wird, wobei die Spannung ($V_{F14}$) der Phase des zusätzlichen Stromrichters (14) basierend auf der Spannung ($V_{F13}$) in der genannten Phase (A, B, C) des Hilfsstromrichters (13) und auf einer benötigten Spannung ($V^*_{11}$) zwischen der ersten Stromleitung (111) und der zweiten Stromleitung (112) am einphasigen Ausgang (11) gesteuert wird, sodass die Spannung ($V_{11}$) des genannten einphasigen Ausgang (11) dann erhalten wird, indem sowohl die Spannung ($V_{F13}$) in der Phase (A, B, C) des Hilfsstromrichters (13), welche an der zweiten Stromleitung (112) des einphasigen Ausgangs (11) angeschlossen ist, als auch die Spannung ($V_{F14}$) der Phase des zusätzlichen Stromrichters (14), welche an der ersten Stromleitung (111) für den genannten einphasigen Ausgang (11) angeschlossen ist, gesteuert werden.

7. Steuerungsverfahren nach Anspruch 6, wobei eine nötige Spannung ($V^*_{F14}$) in der Phase des zusätzlichen Stromrichters (14) als Ergebnis des Unterschieds zwischen der Spannung ($V_{F13}$) in der Phase (A, B, C) des Hilfsstromrichters (13) und der benötigten Spannung ($V^*_{11}$) für den genannten einphasigen Ausgang (11) erhalten wird, und wobei die Spannung ($V_{F14}$) in der Phase des zusätzlichen Stromrichters (14) derart gesteuert wird, dass sie der genannten nötigen Spannung ($V^*_{F14}$) gleich ist.

8. Elektrischer Zug, **dadurch gekennzeichnet, dass** er ein Antriebssystem (100) nach einem der Ansprüche 1 bis 5 umfasst.

9. Elektrischer Zug nach Anspruch 8, **dadurch gekennzeichnet, dass** die Steuereinheit (4) dazu ausgebildet ist, das Steuerungsverfahren nach Anspruch 6 oder 7 zu implementieren.

## Revendications

1. Système d'alimentation pour un train électrique comprenant des charges auxiliaires (3), le système d'alimentation (100) comprenant une sortie auxiliaire triphasée (10) configurée pour être couplée aux charges auxiliaires (3); un bus CC (12); et un convertisseur de puissance auxiliaire triphasé (13) qui est relié entre le bus CC (12) et la sortie auxiliaire triphasée (10) et configuré pour adapter une tension ($V_{BUS}$) du bus CC (12) pour alimenter les charges auxiliaires (3), le système d'alimentation (100) comprenant en outre un convertisseur de puissance monophasé additionnel (14) attaché au bus CC (12) et une sortie monophasée (11) avec une première ligne d'alimentation (111) et une deuxième ligne d'alimentation (112), la première ligne d'alimentation (111) étant reliée à la phase du convertisseur de puissance additionnel (14) et la deuxième ligne d'alimentation (112) étant reliée à l'une des phases (A, B, C) du convertisseur de puissance auxiliaire (13), ladite sortie monophasée (11) comprenant une tension ($V_{11}$) entre la première ligne d'alimentation (111) et la deuxième ligne d'alimentation (112) égale à la différence entre la tension ($V_{F14}$) de la phase du convertisseur de puissance additionnel (14) et la tension ($V_{F13}$) de la phase (A, B, C) du convertisseur de puissance auxiliaire (13) qui est reliée à la deuxième ligne d'alimentation (112) de la sortie monophasée (11), le système d'alimentation comprenant une unité de commande (4) configurée pour commander la tension ($V_{F13}$) dans la phase (A, B, C) du convertisseur de puissance auxiliaire (13) reliée à la deuxième ligne d'alimentation (112) de la sortie monophasée (11) en fonction des besoins requis pour les charges auxiliaires (13) alimentées par la sortie auxiliaire triphasée (10), **caractérisé en ce que** l'unité de commande (4) est configurée également pour commander la tension ($V_{F14}$) dans la phase du convertisseur de puissance additionnel (14) en fonction de la tension ($V_{F13}$) dans ladite phase (A, B, C) du convertisseur de puissance auxiliaire (13) et de la tension requise ($V^*_{11}$) pour ladite sortie monophasée (11) pour des charges additionnelles, l'unité de commande (4) étant configurée en outre pour commander aussi bien la tension ($V_{F13}$) dans la phase (A, B, C) du convertisseur de puissance auxiliaire (13) reliée à la deuxième ligne d'alimentation (112) de la sortie monophasée (11) que la tension ($V_{F14}$) de la phase du convertisseur de puissance additionnel (14) reliée à la première ligne d'alimentation (111) de la sortie monophasée (11), afin de fournir la tension requise ($V^*_{11}$) pour ladite sortie monophasée (11), le convertisseur de puissance additionnel (14) étant à son tour configuré pour adapter la tension CC ($V_{BUS}$) du bus CC (12) à la puissance requise pour la sortie monophasée (11), ladite unité de commande (4) étant configurée en outre pour calculer la tension nécessaire ($V^*_{F14}$) dans la phase du convertisseur de puissance additionnel (14) qui est égale à la différence entre la tension ($V_{F13}$) dans ladite phase (A, B, C) du convertisseur de puissance auxiliaire (13) et la tension requise ($V^*_{11}$) pour ladite sortie monophasée (11) et pour commander la tension ($V_{F14}$) dans la phase du convertisseur de puissance additionnel (14) en fonction de ladite tension nécessaire calculée ($V^*_{F14}$).

2. Système d'alimentation selon la revendication 1, dans lequel le convertisseur de puissance additionnel (14) est physiquement déconnecté du convertisseur de puissance auxiliaire (13).

3. Système d'alimentation selon la revendication 1 ou 2, dans lequel le convertisseur de puissance auxiliaire (13) comprend une branche semiconductrice (13C1, 13C2, 13C3) formée par deux commutateurs commandables (S1, S2) reliés en série dans un point intermédiaire ($P_{13}$), pour chacune des trois phases (A, B, C), et les trois branches semiconductrices (13C1, 13C2, 13C3) sont reliées en parallèle entre une borne positive du bus CC (12) et une borne négative dudit bus CC (12), le convertisseur de puissance additionnel (14) comprenant une branche semiconductrice (14C) formée par deux commutateurs commandables (S1, S2) reliés en série dans un point intermédiaire ($P_{14}$), et lesdits points intermédiaires ($P_{13}$, $P_{14}$) étant reliés à la sortie (10, 11) correspondante du système d'alimentation (100).

4. Système d'alimentation selon la revendication 3, dans lequel les commutateurs commandables (S1, S2) de la branche semiconductrice (13C1) du convertisseur de puissance auxiliaire (13) de la phase (A, B, C) reliée à la sortie monophasée (11) sont conçus pour résister à un courant et/ou une tension plus élevés que les commutateurs commandables (S1, S2) des deux autres branches semiconductrices (13C1, 13C2, 13C3) dudit convertisseur de puissance (13).

5. Système d'alimentation selon la revendication 3 ou 4, dans lequel les commutateurs commandables (S1, S2) de la branche semiconductrice (14C) du convertisseur de puissance additionnel (14) sont conçus pour résister à un courant et/ou une tension plus faibles que les commutateurs commandables (S1, S2) de l'une quelconque des branches semiconductrices (13C1, 13C2, 13C3) du convertisseur de puissance auxiliaire (13).

6. Procédé de commande pour un système d'alimentation d'un train électrique comprenant des charges auxiliaires (3), dans lequel, par le biais d'un convertisseur de puissance auxiliaire triphasé (13) du système d'alimentation (100), la tension ($V_{BUS}$) d'un bus CC (12) dudit système d'alimentation (100) est adaptée pour alimenter les charges auxiliaires (3), et ladite tension adaptée ($V_{BUS}$) est fournie à travers une sortie auxiliaire triphasée (10) du système d'alimentation (100), le procédé de commande étant adapté pour être implémenté dans un système d'alimentation (100) comprenant en outre une sortie monophasée (11) avec une première ligne d'alimentation (111) et une deuxième ligne d'alimentation (112) et un convertisseur de puissance monophasé additionnel (14) attaché au bus CC (12) et à la première ligne d'alimentation (111) de la sortie monophasée (11), et dans lequel l'une des phases (A, B, C) du convertisseur de puissance auxiliaire (13) est reliée à la deuxième ligne d'alimentation (112) de la sortie monophasée (11), **caractérisé en ce qu'**à fin d'obtenir une tension requise ($V^*_{11}$) entre la première ligne d'alimentation (111) et la deuxième ligne d'alimentation (112) pour être fournie à la sortie monophasée (11) pour des charges additionnelles, une adaptation de la tension ($V_{BUS}$) du bus CC (12) est réalisée dans le procédé de commande en commandant la différence entre la tension ($V_{F13}$) de la phase (A, B, C) du convertisseur de puissance auxiliaire (13) reliée à la deuxième ligne d'alimentation (112) et la tension ($V_{F14}$) de la phase du convertisseur de puissance additionnel (14), la différence résultante dans la sortie monophasée (11) étant la tension ($V_{11}$) qui est fournie à la sortie monophasée (11) dudit système d'alimentation (100), la tension ($V_{F13}$) de la phase (A, B, C) du convertisseur de puissance auxiliaire (13) considérée pour alimenter les charges auxiliaires (3) étant commandée en fonction des besoins pour alimenter les charges auxiliaires (3), la tension ($V_{F14}$) de la phase du convertisseur de puissance additionnel (14) étant commandée en fonction de la tension ($V_{F13}$) dans ladite phase (A, B, C) du convertisseur de puissance auxiliaire (13) et d'une tension requise ($V^*_{11}$) entre la première ligne d'alimentation (111) et la deuxième ligne d'alimentation (112) dans la sortie monophasée (11), de telle sorte que la tension ($V_{11}$) de ladite sortie monophasée (11) est alors obtenue en commandant aussi bien la tension ($V_{F13}$) dans la phase (A, B, C) du convertisseur de puissance auxiliaire (13) reliée à la deuxième ligne d'alimentation (112) de la sortie monophasée (11) que la tension ($V_{F14}$) de la phase du convertisseur de puissance additionnel (14) reliée à la première ligne d'alimentation (111) de la sortie monophasée (11).

7. Procédé de commande selon la revendication 6, dans lequel une tension nécessaire ($V^*_{F14}$) dans la phase du convertisseur de puissance additionnel (14) est obtenue en résultat de la différence entre la tension ($V_{F13}$) dans ladite phase (A, B, C) du convertisseur de puissance auxiliaire (13) et la tension

requise ($V^*_{11}$) pour ladite sortie monophasée (11), et dans lequel la tension ($V_{F14}$) dans la phase du convertisseur de puissance additionnel (14) est commandée de telle sorte qu'elle soit égale à ladite tension nécessaire ($V^*_{F14}$).

8. Train électrique, **caractérisé en ce qu'**il comprend un système d'alimentation (100) selon l'une quelconque des de revendications 1 à 5.

9. Train électrique selon la revendication 8, **caractérisé en ce que** l'unité de commande (4) est configurée pour implémenter le procédé de commande selon la revendication 6 ou 7.

Fig. 1

Fig. 2

EP 4 484 202 B1

$V_{F14}$

$V_{F13}$

$V_{11}$  $-V_{F14}$

Fig. 3a

$V_{F14}$  $V_{F13}$  $-V_{F14}$

$V_{11}$

Fig. 3b

14

(Prior art)

Fig. 4

**EP 4 484 202 B1**

## REFERENCES CITED IN THE DESCRIPTION

### Patent documents cited in the description

- EP 2695763 A2
- US 11173803 B2
- US 10000122 B2